**Europäisches Patentamt**

**European Patent Office**

**Office européen des brevets**

(19)

(11) Veröffentlichungsnummer: **0 215 867**
**B1**

(12) # EUROPÄISCHE PATENTSCHRIFT

(45) Veröffentlichungstag der Patentschrift:
**29.11.89**

(21) Anmeldenummer: **86901854.9**

(22) Anmeldetag: **08.03.86**

(86) Internationale Anmeldenummer:
**PCT/EP 86/00126**

(87) Internationale Veröffentlichungsnummer:
**WO 86/05308 (12.09.86 Gazette 86/20)**

(51) Int. Cl.⁴: **G 11 B 7/095**, G 11 B 7/08,
**G 11 B 21/10**

(54) **SCHALTUNGSANORDNUNG FÜR EIN ABSPIELGERÄT VON AUDIO- UND/ODER VIDEOPLATTEN.**

(30) Priorität: **09.03.85 DE 3508422**

(43) Veröffentlichungstag der Anmeldung:
**01.04.87 Patentblatt 87/14**

(45) Bekanntmachung des Hinweises auf die Patenterteilung:
**29.11.89 Patentblatt 89/48**

(84) Benannte Vertragsstaaten:
**AT BE CH DE FR GB IT LI LU NL SE**

(56) Entgegenhaltungen:
**DE-A- 3 346 112**
**US-A- 4 234 837**

**Patents Abstracts of Japan, Band 8, nr. 282 (P-323)**
**(1719) 22 dezember 1984 & JP-A-59148185**
**Patents Abstracts of Japan, Band 4, nr. 74 (P-13) (556)**
**30 Mai 1980, Seite 3P13 & JP-A-5538686**
**Patents Abstracts of Japan, Band 6, nr 116, (P-1259(994)**
**29 Juni 1982 & JP-A-5744234**
**Patents Abstracts of Japan, Band 3, nr. 18 (E-91) 16**
**Februar 1979, Seite 128E91 & JP-A-53147509**
**Patents Abstracts of Japan, Band 8, nr 10, (P-248)(1447)**
**18 Januar 1984 & JP-A-58169343**

(73) Patentinhaber: **Deutsche Thomson-Brandt GmbH,**
**Hermann-Schwer-Strasse 3 Postfach 1307,**
**D-7730 Villingen-Schwenningen (DE)**

(72) Erfinder: **BAAS, Dieter, Sofienstrasse 10, D-7640 Kehl**
**(DE)**

**Beschreibung**

Die Erfindung betrifft einen Spurregelkreis für ein berührungslos abtastendes Abspielgerät von Audio- und/oder Videoplatten mit einem Fein- und einem Grobantrieb zur radialen Nachsteuerung einer Abtastvorrichtung, bei dem ein in der Impulsbreite in Abhängigkeit von der radialen Abweichung des Istwerts vom Sollwert gesteuertes Spurfehlersignal erzeugt wird.

CD-Spieler sind z.B. mit derartigen Spurregelkreisen ausgestattet. Meist ist der Spurregelkreis bei einem CD-Spieler aus einem Grob- und einem Feinantrieb aufgebaut, der auf dem Grobantrieb befestigt ist. Der Grobantrieb kann z.B. als Spindel ausgeführt sein, die von einem Motor angetrieben wird. Deshalb ist die optische Abtastvorrichtung, die meist aus einem Laser, mehreren Linsen, einem Prismenstrahlteiler und einem Photodetektor besteht, mittels des Grobantriebs in radialer Richtung bezüglich der CD-Platte bewegbar.

Mittels des Feinantriebs ist der Lichtstrahl in radialer Richtung z.B. um einen kleinen Winkel kippbar, so daß der Lichtstrahl durch diese Kippbewegung ein kleines Stück entlang einem Radius der CD-Platte fahren kann.

Weil der Regelbereich des Feinantriebs je nach Typ nut etwa ±100 Spuren umfaßt, muß der Grobantrieb beim Spielen einer CD-Platte von Zeit zu Zeit eingeschaltet werden, damit der Lichtstrahl nicht von der abzutastenden Spur reißt. Der Regelbereich des Feinantriebs ist zumindest so groß zu wählen, daß er die Exzentrizitäten einer CD-Platte ausregeln kann.

Aus der JP-A 59-148 185 ist ein Spurregelkreis mit einem Fein- und Grobantrieb bekannt. Das Spurfehlersignal wird einerseits dem Feinantrieb und andererseits über eine Auswerteschaltung aus einem Tiefpaß, zwei Komparatoren und einem Oder-Gatter dem Grobantrieb zugeführt. Wenn das Spurfehlersignal einen vorgegebenen ersten Schwellwert übersteigt, bewirkt der erste Komparator, daß das Flip-Flop gesetzt wird, wodurch der Grobantrieb eingeschaltet wird. Wenn das Spurfehlersignal unter einen zweiten Schwellwert sinkt, setzt der zweite Komparator das Flip-Flop zurück, wodurch der Grobantrieb ausgeschaltet wird.

Ein Nachteil dieses bekannten Spurregelkreises ist darin zu sehen, daß infolge von Fertigungstoleranzen die Ansprechspannungen der Grobantriebe streuen und die Gobantriebe daher auch unterschiedliches Anlaufverhalten zeigen, wenn sie mit der gleichen Spannung angesteuert werden.

Es ist aber wünschenswert, daß bei jedem Abspielgerät der Grobantrieb stets bei der gleichen Abweichung des Istwerts vom Sollwert eingeschaltet wird und bei jedem Abspielgerät das gleiche Anlaufverhalten zeigt.

Der Erfindung liegt daher die Aufgabe zugrunde, einen Spurregelkreis mit einem Grob- und einem Feinantrieb so zu gestalten, daß sich Fertigungstoleranzen und unterschiedliches Anlaufverhalten der einzelnen Grobantriebe nicht mehr nachteilig auf das Zusammenwirken von Grob- und Feinantrieb auswirken.

Die Erfindung löst diese Aufgabe dadurch, daß das Spurfehlersignal einem Analog-Digital-Wandler zugeführt wird, daß das höchstwertige Bit des Ausgangssignals des Analog-Digital-Wandlers die Ansteuerrichtung des Grobantriebs bestimmt und daß aus den restlichen Bits des Ausgangssignals des Analog-Digital-Wandlers die Impulsbreiten der Einschaltimpulse für den Grobantrieb gewonnen werden.

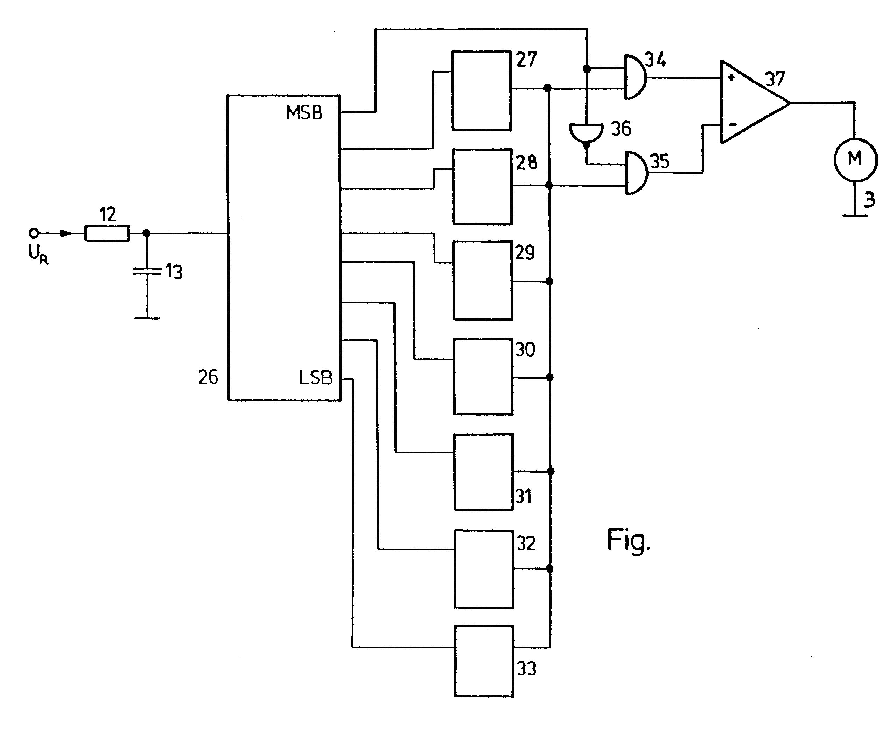

Anhand des in der Figur abgebildeten Ausführungsbeispieles wird die Erfindung zuerst beschrieben und anschließend erläutert.

Das Spurfehlersignal $U_R$ wird über einen Tiefpaß aus einem Widerstand 12 und einer Kapazität 13 dem Eingang eines Analog-Digital-Wandlers 26 zugeführt. Der Ausgang des Analog-Digital-Wandlers 26, an dem das höchstwertige Bit MSB anliegt, ist mit dem ersten Eingang eines UND-Gatters 34 und über einen Inverter 36 mit dem ersten Eingang eines UND-Gatters 35 verbunden. Die restlichen Ausgänge des Analog-Digital-Wandlers 26, an denen die restlichen Bits abnehmbar sind, sind mit dem Eingang je eines Monoflops 27-33 verbunden. Vom niedrigstwertigen Bit LSB zum höchstwertigen Bit MSB nehmen die Zeitkonstanten der Monoflops 27-33 zu. Die miteinander verbundenen Ausgänge der Monoflops 27-33 sind je mit dem zweiten Eingang des UND-Gatters 34 und 35 verbunden. Der Ausgang des UND-Gatters 34 ist mit dem nichtinvertierenden Eingang eines Verstärkers 37 verbunden, dessen invertierender Eingang mit dem Ausgang des UND-Gatters 35 verbunden ist. Der Ausgang des Verstärkers 37 ist mit dem Grobantrieb 3 verbunden.

Das höchstwertige Bit MSB bestimmt die Drehrichtung des Grobantriebs 3. Ist das höchstwertige Bit MSB eine logische Eins, so ist das UND-Gatter 35 geöffnet, während das UND-Gatter 35 gesperrt ist. Der Verstärker 37 bewirkt daher, daß der Grobantrieb 3 in die eine Richtung gedreht wird. Ist dagegen das höchstwertige Bit MSB eine logische Null, so wird das UND-Gatter 34 gesperrt, während das UND-Gatter 35 geöffnet ist. Der Verstärker 37 bewirkt in diesem Fall, daß der Grobantrieb 3 in die andere Richtung gedreht wird.

Die restlichen Bits bestimmen die Einschaltdauer des Grobantriebs 3. Je größer das Spurfehlersignal $U_R$ wird, desto mehr Monoflops werden gesetzt. Weil aber die Zeitkonstanten der Monoflops so gewählt sind, daß sie vom niedrigstwertigen Bit LSB zum höchstwertigen Bit MSB zunehmen, bestimmt das Spurfehlersignal $U_R$ die Einschaltdauer des Grobantriebs 3. Je größer das Spurfehlersignal $U_R$ wird, desto länger wird der Grobantrieb 3 eingeschaltet, oder mit anderen Worten ausgedrückt, desto größer wird die Impulsbreite der Einschaltimpulse. Ändert sich das höchstwertige Bit MSB, so wird die Drehrichtung des Grobantriebs umgekehrt.

Dadurch, daß das Spurfehlersignal mittels der Monoflops gewichtet wird, wirken sich Fertigungstoleranzen beim Grobantrieb nicht mehr nachteilig auf das Zusammenwirken von Fein- und Grobantrieb aus. Auch nach Sprüngen über mehrere Spuren, wenn der Servokreis für den Feinantrieb wieder geschlossen wird, beeinträchtigt ein Nachlaufen des Grobantriebs 3 nicht mehr die Abtastung der Daten, weil das gewichtete Spurfehlersignal am Ausgang des Analog-Digital-Wandlers 26 sofort eine Korrektur des Grobantriebs 3 bewirkt. Schließlich ist der erfindungsgemäße Spurregelkreis gegenüber Erschütterungen von außen weniger empfindlich als bekannte Spurregelkreise.

## Patentansprüche

1. Spurregelkreis für ein berührungslos abtastendes Abspielgerät von Audio- und/oder Videoplatten mit einem Fein- und einem Grobantrieb (3) zur radialen Nachsteuerung einer Abtastvorrichtung, bei dem ein in der Impulsbreite in Abhängigkeit von der radialen Abweichung des Istwerts der Spur vom Sollwert gesteuertes Spurfehlersignal ($U_R$) erzeugt wird, dadurch gekennzeichnet, daß das Spurfehlersignal ($U_R$) einem Analog-Digital-Wandler (26) zugeführt wird, daß das höchstwertige Bit (MSB) des Ausgangssignals des Analog-Digital-Wandlers (26) die Ansteuerrichtung des Grobantriebs (3) bestimmt und daß aus den restlichen Bits des Ausgangssignals des Analog-Digital-Wandlers (26) die Impulsbreiten der Einschaltimpulse für den Grobantrieb (3) gewonnen werden.

2. Spurregelkreis nach Anspruch 1, dadurch gekennzeichnet, daß das höchstwertige Bit (MSB) des Ausgangssignals des Analog-Digital-Wandlers (26) einer logischen Schaltung (34, 35, 36) zugeführt wird, daß die restlichen Bits des Ausgangssignals des Analog-Digital-Wandlers (26) je einem Monoflop (27, 28, 29, 30, 31, 32, 33) zugeführt werden und daß die miteinander verbundenen Ausgänge der Monoflops (27-33) mit der logischen Schaltung verbunden sind, deren Ausgangssignal den Grobantrieb (3) ansteuert.

3. Spurregelkreis nach Anspruch 2, dadurch gekennzeichnet, daß das höchstwertige Bit (MSB) des Ausgangssignals des Analog-Digital-Wandlers (26) dem ersten Eingang eines ersten UND-Gatters (34) und über einen Inverter (36) dem ersten Eingang eines zweiten UND-Gatters (35) zugeführt wird, daß die miteinander verbundenen Ausgänge der Monoflops (27-33), mit dem zweiten Eingang des ersten und des zweiten UND-Gatters (34, 35) verbunden sind und daß der Ausgang des ersten UND-Gatters (34) mit dem nichtinvertierenden Eingang und der Ausgang des zweiten UND-Gatters (35) mit dem invertierenden Eingang eines Verstärkers (37) verbunden sind, dessen Ausgang mit dem Grobantrieb (3) verbunden ist.

## Claims

1. Track control circuit for a contactless scanning playback device for audio and/or video discs with a fine and a coarse drive (3) for the radial readjustment of a scanning device, in which there is generated a track error signal ($U_R$) controlles in the pulse width as a function of the radial deviation of the actual value of the track from the desired value, characterised in that the radial error signal ($U_R$) is fed to an analog-to-digital converter (26), that the most significant bit (MSB) of the output signal of the analog-to-digital converter (26) determines the control direction of the coarse drive (3) and that the pulse widths of the switching pulses for the coarse drive (3) are obtained from the remaining bits of the output signal of the analog-to-digital converter (26).

2. Track control circuit according to claim 1, characterised in that the most significant bit (MSB) of the output signal of the analog-to-digital converter (26) is fed to a logic circuit (34, 35, 36), that the remaining bits of the output signal of the analog-to-digital converter (26) are each fed to a monoflop (27, 28, 29) and that the interconnected outputs of the monoflops (27-33) are connected to the logic circuit the output signal of which controls the coarse drive (3).

3. Track control circuit according to claim 2, characterised in that the most significant bit (MSB) of the output signal of the analog-to-digital converter (26) is fed to the first input of a first AND gate (34) and via an inverter (36) to the first input of a second AND gate (35), that the interconnected outputs of the monoflops (27-33) are connected to the second input of the first and second AND gates (34, 35) and that the output of the first AND gate (34) is connected to the non-inverting input and the output of the second AND gate (35) is connected to the inverting input of an amplifier (37) the output of which is connected to the coarse drive (3).

## Revendications

1. Circuit de réglage sur une piste pour un dispositif, qui réalise une exploration sans contact, de lecture de disques audio et/ou vidéo comportant un système (3) d'entraînement précis et dispositif d'entraînement approché servant à réaliser la commande radiale asservie d'un dispositif d'exploration, et dans lequel un signal impulsionnel d'écart de piste ($U_R$), dont la largeur est commandée en fonction de l'écart radial entre la valeur réelle de la piste et la valeur de consigne, est produit, caractérisé en ce que le signal d'écart de piste ($U_R$) est envoyé à un convertisseur analogique/numérique (26), que le bit de poids maximum (MSB) du signal de sortie du convertisseur analogique/numérique (26) détermine le sens de la commande du dispositif d'entraînement approché (3) et que les largeurs des impulsions de branchement pour le dispositif d'entraînement approché (3) sont obtenues à partir des bits résiduels du signal de sortie du convertisseur analogique/numérique (26).

2. Circuit de réglage sur une piste selon la revendication 1, caractérisé en ce que le bit de poids maximum (MSB) du signal de sortie du convertisseur analogique/numérique (26) est envoyé à un circuit logique (34, 35, 36), que les bits résiduels du signal de sortie du convertisseur analogique/numérique (26) sont envoyés à un multivibrateur monostable respectif (27, 28, 29, 30, 31, 32, 33) et que les sorties, reliés entre elles, des multivibrateurs monostables (27-33) sont reliées au circuit logique, dont le signal de sortie commande le dispositif d'entraînement approché (3).

3. Circuit de réglage sur une piste selon la revendication 2, caractérisé en ce que le bit de poids maximum (MSB) du signal de sortie du convertisseur analogique/numérique (26) est envoyé à la première entrée d'une première porte ET (34) et, par l'intermédiaire d'un inverseur (36), à la première entrée d'une seconde porte ET (35), que les sorties, reliées entre elles, des multivibrateurs monostables (27-33) sont reliées à la seconde entrée des première et seconde portes ET (34, 35), et que la sortie de la première porte ET (34) est reliée à l'entrée non inverseuse et la sortie de la seconde porte ET (35) à l'entrée inverseuse d'un amplificateur (37), dont la sortie est reliée au dispositif d'entraînement approché (3).

Fig.